# EUROPEAN PATENT APPLICATION

(11) **EP 2 223 896 A1**
(43) Date of publication of application: **01.09.2010**
(21) Application number: 10250183.0
(22) Date of filing: 03.02.2010
(51) Int. Cl.: C01G 23/047, B01J 35/00, C09K 3/18

(54) **Hydrophilizing agent, method of producing hydrophilizing agent and hydrophilic product**

(30) Priority: 04.02.2009 JP 2009023893
(71) Applicant: Sumitomo Chemical Company, Limited, Tokyo 104-8260 (JP)
(72) Inventor: Sakatani, Yoshiaki, Niihama-shi, Ehime 792-0025 (JP)
(74) Representative: Duckworth, Timothy John

(57) **Abstract**

The hydrophilizing agent of the present invention includes titanium oxide particles, tungsten oxide particles, phosphoric acid (salt) and dispersion medium, and the molar ratio of the phosphoric acid (salt) to the titanium oxide is from 0.001 to 0.2. In a producing method of such a hydrophilizing agent, titanium oxide particles are dispersed in dispersion medium containing phosphoric acid (salt) dissolved, and the obtained titanium oxide particle dispersion is mixed with the tungsten oxide particles.

## Description

### BACKGROUND

### 1. Technical Field

The present invention relates to a hydrophilizing agent, which can easily form a film showing high hydrophilic behavior with or without light.

### 2. Description of Related Art

A method of enhancing the hydrophilicity of the surface of various kinds of materials using photocatalytic activity displayed by a photocatalytic component such as titanium oxide has attracted attention, and sole dispersion of titanium oxide particles, which can use in the method using titanium oxide as a photocatalytic component, is commercially available.

Furthermore, a technique of using titanium oxide and tungsten oxide in combination as photocatalytic components has been proposed in recent years. Specifically, a method (Japanese Patent Application Laid-Open No. H10-114545) of forming a layer of titanium oxide particles on the surface of a substrate and then coating the layer with a solution containing tungstic acid and solidifying the solution so as to form a hydrophilic film or of coating the surface of a substrate using a solution including titanium oxide particles and tungstic acid and then solidifying the solution so as to form a hydrophilic film; a method (Japanese Patent Application Laid-Open No. 2005-231935) of forming a hydrophilic film on the surface of a substrate using titanium oxide sol containing tungsten oxide, which is obtained by dispersing titanium oxide particles and tungsten oxide particles in dispersion medium; and the like are known.

### SUMMARY

However, with the technique described in Japanese Patent Application Laid-Open No. H10-114545, a film deposition process for the surface of a substrate is complicated, since it is necessary to calcine tungstic acid at high temperature to obtain tungsten oxide and, moreover, at least two processes are required for forming a layer of titanium oxide particles and then forming a layer made of tungsten oxide.

On the other hand, with the technique described in Japanese Patent Application Laid-Open No. 2005-231935, a film can be formed on the surface of a substrate in one process, though titanium oxide particles and tungsten oxide particles tend to agglomerate with each other, causing solid-liquid separation of sol, which is used here, during transportation or storage, for example. When solid-liquid separation arises, uniform coating cannot be achieved and film formation itself becomes difficult, or, even when a film is formed, titanium oxide particles and tungsten oxide particles in the film exist ununiformly, and therefore sufficient hydrophilicity cannot be expressed.

Consequently, an object of the present invention is to provide a hydrophilizing agent, which includes titanium oxide particles and tungsten oxide particles but tends not to cause solid-liquid separation since agglomeration of particles is suppressed.

The present inventors have earnestly conducted studies to try to achieve the above object. As a result, it has been found that agglomeration of particles is suppressed when a certain amount of phosphoric acid or a phosphoric acid salt (hereinafter, referred to as phosphoric acid (salt)) coexists with titanium oxide particles in dispersion, which is obtained by dispersing particles of titanium oxide (hereinafter, referred to as titanium oxide particles) and particles of tungsten oxide (hereinafter, referred to as tungsten oxide particles) in dispersion medium. It has further been found that agglomeration of particles can be suppressed more effectively when the phosphoric acid (salt) exists adjacent to the titanium oxide particles in this regard, and such dispersion, in which the phosphoric acid (salt) exists adjacent to the titanium oxide particles, can be obtained when the titanium oxide particles are dispersed in a phosphoric acid (salt) solution before mixing the titanium oxide particles with the tungsten oxide particles. The present invention has been achieved based on these findings.

That is, a hydrophilizing agent of the present invention includes: titanium oxide particles; tungsten oxide particles; phosphoric acid (salt); and dispersion medium, wherein the molar ratio of the phosphoric acid (salt) to the titanium oxide is from 0.001 to 0.2.

A method of producing a hydrophilizing agent of the present invention comprises: a step of dispersing titanium oxide particles in dispersion medium containing phosphoric acid (salt) dissolved; and a step of mixing the obtained titanium oxide particle dispersion with the tungsten oxide particles.

A hydrophilic product of the present invention is a hydrophilic product comprising a hydrophilic film forming the surface, wherein the hydrophilic film has been formed using a hydrophilizing agent of the present invention.

With the present invention, it is possible to provide a hydrophilizing agent, which includes titanium oxide particles and tungsten oxide particles but tends not to cause solid-liquid separation since agglomeration of particles is suppressed. When the hydrophilizing agent is used, it becomes possible to easily form a film showing high hydrophilic behavior with or without light (e.g., under a light-blocked condition, under irradiation of visible light including no ultraviolet light or the like).

### BRIEF DESCRIPTION OF THE SEVERAL VIEWS OF THE DRAWINGS

FIG. 1 is a schematic view for explaining a light irradiator used in Example 1;
FIG. 2 is a graph for showing the result of hydrophilicity evaluation of hydrophilizing agents obtained in Examples 1, 2 and Comparative Example 2 under Condition (1);
FIG. 3 is a graph for showing the result of hydrophilicity evaluation of hydrophilizing agents obtained in Examples 1, 2 and Comparative Example 2 under Condition (2);
FIG. 4 is a graph for showing the result of hydrophilicity evaluation of hydrophilizing agents obtained in Examples 1, 2 and Comparative Example 2 under Condition (3); and
FIG. 5 is a graph for showing the result of hydrophilicity evaluation of hydrophilizing agents obtained in Examples 1, 2 and Comparative Example 2 under Condition (4).

### DETAILED DESCRIPTION

### (Hydrophilizing Agent)

A hydrophilizing agent of the present invention includes: at least one type of titanium oxide particles; at least one type of tungsten oxide particles; at least one type of phosphoric acid (salt); and at least one type of dispersion medium. That is, in the hydrophilizing agent of the present invention, titanium oxide particles and tungsten oxide particles showing hydrophilicity enhancing behavior are dispersed in dispersion medium in the presence of phosphoric acid (salt). Here, phosphoric acid (salt) existing adjacent to titanium oxide particles is adsorbed on the surface of the titanium oxide particles. The titanium oxide particles in such a state tend not to agglomerate with the tungsten oxide particles and therefore agglomeration of particles is suppressed in the hydrophilizing agent of the present invention. It is to be noted that the hydrophilizing agent, in which the phosphoric acid (salt) exists adjacent to the titanium oxide particles, can be obtained easily by, for example, a method of producing a hydrophilizing agent of the present invention, which will be described later.

The titanium oxide particles included in the hydrophilizing agent of the present invention are not especially limited as long as the same are particulate titanium oxide showing hydrophilicity enhancing behavior, and an example thereof is: metatitanic acid particles; titanium dioxide [TiO₂] particles having a crystal form such as Anatase, Brookite or Rutile; or the like.

The metatitanic acid particles can be obtained by, for example, a method of heating an aqueous solution of titanyl sulfate to cause hydrolysis.

The titanium dioxide particles can be obtained by, for example, (i) a method of not heating an aqueous solution of titanyl sulfate or titanium chloride but adding base to the aqueous solution so as to obtain sediment and calcining the obtained sediment, (ii) a method of adding water, an acid aqueous solution or a base aqueous solution to titanium alkoxide so as to obtain sediment and calcining the obtained sediment, (iii) a method of calcining metatitanic acid, or the like. Such methods can provide titanium dioxide particles having a desired crystal form, such as Anatase, Brookite or Rutile, by controlling the calcining temperature or the calcining time at the time of calcination.

Moreover, the titanium oxide particles included in the hydrophilizing agent of the present invention can be obtained by a method of reacting a titanium compound with base, adding ammonia to the obtained product, causing solid-liquid separation after maturation and calcining the solid content, or the like. An example of the titanium compound to be used in such a method is titanium trichloride [TiCl₃], titanium tetrachloride [TiCl₄], titanium sulfate [Ti(SO₄)₂·mH₂O, 0≤m≤20], titanium oxysulfate [TiOSO₄·nH₂O, 0≤n≤20], titanium oxychloride [TiOCl₂] or the like. An example of the base to be used, which reacts with the titanium compound, is sodium hydroxide, potassium hydroxide, sodium carbonate, potassium carbonate, ammonia, hydrazine, hydroxylamine, monoethanolamine, an acyclic amine compound, a cyclic aliphatic amine compound or the like.

Titanium oxide particles described in: Japanese Patent Application Laid-Open No. 2001-72419; Japanese Patent Application Laid-Open No. 2001-190953; Japanese Patent Application Laid-Open No. 2001-316116; Japanese Patent Application Laid-Open No. 2001-322816; Japanese Patent Application Laid-Open No. 2002-29749; Japanese Patent Application Laid-Open No. 2002-97019; International Application WO01/10552; Japanese Patent Application Laid-Open No. 2001-212457; Japanese Patent Application Laid-Open No. 2002-239395; International Application WO03/080244; International Application WO02/053501; Japanese Patent Application Laid-Open No. 2007-69093; Chemistry Letters, Vol. 32, No. 2, pp. 196-197 (2003); Chemistry Letters, Vol. 32, No. 4, pp. 364-365 (2003); Chemistry Letters, Vol. 32, No. 8, pp. 772-773 (2003); Chem. Mater., 17, pp. 1548-1552 (2005); or the like may be used as the titanium oxide particles included in the hydrophilizing agent of the present invention, instead of the titanium oxide particles described above. Moreover; titanium oxide particles obtained by a method described in: Japanese Patent Application Laid-Open No. 2001-278625; Japanese Patent Application Laid-Open No. 2001-278626; Japanese Patent Application Laid-Open No. 2001-278627; Japanese Patent Application Laid-Open No. 2001-302241; Japanese Patent Application Laid-Open No. 2001-335321; Japanese Patent Application Laid-Open No. 2001-354422; Japanese Patent Application Laid-Open No. 2002-29750; Japanese Patent Application Laid-Open No. 2002-47012; Japanese Patent Application Laid-Open No. 2002-60221; Japanese Patent Application Laid-Open No. 2002-193618; Japanese Patent Application Laid-Open No. 2002-249319; or the like may be also used.

The particle diameter of the titanium oxide particles is not especially limited but is normally 20 to 150 nm, or preferably 40 to 100 nm, by mean dispersed particle diameter from the aspect of obtainment high hydrophilicity enhancing behavior.

The BET specific surface area of the titanium oxide particles is not especially limited but is normally 100 to 500 m²/g, or preferably 300 to 400 m²/g, from the aspect of obtainment high hydrophilicity enhancing behavior.

The tungsten oxide particles included in the hydrophilizing agent of the present invention is not especially limited as long as the same are particulate tungsten oxide showing hydrophilicity enhancing behavior, and an example thereof is tungsten trioxide [WO₃] particles or the like.

The tungsten trioxide particles can be obtained by, for example, (i) a method of adding acid to an aqueous solution of tungstate so as to obtain tungstic acid as sediment and calcining the obtained tungstic acid, (ii) a method of heating ammonium metatungstate or ammonium paratungstate so as to cause thermal decomposition, or the like.

The particle diameter of the tungsten oxide particles is not especially limited but is normally 50 to 200 nm, or preferably 80 to 130 nm, by mean dispersed particle diameter from the aspect of obtainment high hydrophilicity enhancing behavior.

The BET specific surface area of the tungsten oxide particles is not especially limited but is normally 5 to 100 m²/g, or preferably 20 to 50 m²/g, from the aspect of obtainment high hydrophilicity enhancing behavior.

Regarding the hydrophilizing agent of the present invention, the ratio of the titanium oxide particles to the tungsten oxide particles (titanium oxide particles : tungsten oxide particles) is normally 1:4 to 4:1, or preferably 2:3 to 3:2, by mass ratio.

An example of the phosphoric acid (salt) included in the hydrophilizing agent of the present invention is phosphoric acid, ammonium salt thereof, sodium salt thereof, potassium salt thereof or the like, and especially preferable thereamong is ammonium phosphate salt such as ammonium dihydrogen phosphate or diammonium hydrogen phosphate.

Regarding the hydrophilizing agent of the present invention, the molar ratio of the phosphoric acid (salt) to the titanium oxide is from 0.001 to 0.2. The molar ratio is preferably equal to or larger than 0.01 and equal to or smaller than 0.05. When the molar ratio (the phosphoric acid (salt) / the titanium oxide particles) is smaller than 0.001, it is impossible to sufficiently suppress agglomeration of particles in the dispersion. On the other hand, when the molar ratio (the phosphoric acid (salt) / the titanium oxide particles) is larger than 0.2, further effect corresponding to the amount cannot be obtained.

The dispersion medium included in the hydrophilizing agent of the present invention is not especially limited as long as the same is solvent for dissolving the phosphoric acid (salt), and water-based aqueous solvent is normally used. Specifically, the dispersion medium may be only water, or mixed solvent of water and water-soluble organic solvent. When mixed solvent of water and water-soluble organic solvent is used, the content of water is preferably equal to or larger than 50 % by mass. An example of the water-soluble organic solvent is: water-soluble alcoholic such as methanol, ethanol, propanol or butanol; acetone; methyl ethyl ketone; or the like.

The content of the dispersion medium is normally 5 to 200 times by mass, or preferably 10 to 100 times by mass, of the total amount of the titanium oxide particles and the tungsten oxide particles. The titanium oxide particles and the tungsten oxide particles tend to settle out when the content of the dispersion medium is smaller than 5 times by mass while volumetric efficiency becomes poor when the content of the dispersion medium is larger than 200 times by mass.

The hydrophilizing agent of the present invention preferably also includes at least one type of an electron-attracting substance or at least one type of a precursor thereof. An electron-attracting substance is a compound, which is supported on the surface of the titanium oxide particles and the surface of the tungsten oxide particles and can display electron-attractiveness, and a precursor of an electron-attracting substance is a compound, which can possibly transit to an electron-attracting substance on the surface of the particles (e.g., compound which can possibly be made to transit to an electron-attracting substance by light irradiation). When an electron-attracting substance exists and is supported on the surface of the particles, recombination of electrons excited to conduction band by light irradiation and holes generated at valence band is suppressed and the hydrophilicity enhancing behavior can be further promoted.

The electron-attracting substance or the precursor thereof preferably includes at least one metal selected from the group consisting of Cu, Pt, Au, Pd, Ag, Fe, Nb, Ru, Ir, Rh and Co. More preferably, the electron-attracting substance or the precursor thereof includes at least one metal selected from the group consisting of Cu, Pt, Au and Pd. An example of the electron-attracting substance is: a metal composed of metal atoms; an oxide or a hydroxide of a metal; or the like, and an example of the precursor of an electron-attracting substance is a nitrate, a sulfate, a halide, an organic acid salt, a carbonate or the like of a metal composed of metal atoms.

A preferable specific example of the electron-attracting substance is a metal such as Cu, Pt, Au and Pd. Moreover, a preferable specific example of the precursor of an electron-attracting substance is: a precursor including Cu such as copper nitrate [Cu(NO₃)₂], copper sulfate [CuSO₄], copper chloride [CuCl₂, CuCl], copper bromide [CuBr₂, CuBr], copper iodide [CuI], copper iodate [CuI₂O₆], copper ammonium chloride [Cu(NH₄)₂Cl₄], copper oxychloride [Cu₂Cl(OH)₃], copper acetate [CH₃COOCu, (CH₃COO)₂Cu], copper formate [(HCOO)₂Cu], copper carbonate IC_{U}CO₃], copper oxalate [CuC₂O₄], copper citrate [Cu₂C₆H₄O₇] or copper phosphate [CuPO₄]; a precursor including Pt such as platinum chloride [PtCl₂, PtCl₄], platinum bromide [PtBr₂, PtBr₄], platinum iodide [PtI₂, PtI₄], platinum potassium chloride [K₂(PtCl₄)], hexachloroplatinic acid [H₂PtCl₆], platinum sulfite [H₃Pt(SO₃)₂OH], platinum oxide [PtO₂], tetraammineplatinum chloride [Pt(NH₃)₄Cl₂], hydrocarbon tetraammineplatinum [C₂H₁₄N₄O₆Pt], tetraammineplatinum hydrogen phosphate [Pt(NH₃)₄HPO₄], tetraammineplatinum hydroxide [Pt(NH₃)₄(OH)₂], tetraammineplatinum nitrate [Pt(NO₃)₂(NH₃)₄] or tetraammineplatinum tetrachloroplatinum [(Pt(NH₃)₄)(PtCl₄)]; a precursor including Au such as gold chloride [AuCl], gold bromide [AuBr], gold iodide [AuI], gold hydroxide [Au(OH)₂], tetrachloroauric acid [HAuCl₄], potassium tetrachloroaurate [KAuCl₄], potassium tetrabromoaurate [KAuBr₄] or gold oxide [Au₂O₃]; and a precursor including Pd such as palladium acetate [(CH₃COO)₂Pd], palladium chloride [PdCl₂], palladium bromide [PdBr₂], palladium iodide [PdI₂], palladium hydroxide [Pd(OH)₂], palladium nitrate [Pd(NO₃)₂], palladium oxide [PdO], palladium sulfate [PdSO₄], potassium tetrachloropalladate [K₂(PdCl₄)], potassium tetrabromopalladate [K₂(PdBr₄)], tetraamminepalladium nitrate [Pd(NH₃)₄(NO₃)₂], tetraamminepalladium tetrachloropalladate [(Pd(NH₃)₄)(PdCl₄)], ammonium tetrachloropalladate [(NH₄)₂PdCl₄], tetraamminepalladium chloride [Pd(NHs)₄Cl₂] or tetraamminepalladium bromide [Pd(NH₃)₄Br₂].
At least one type of an electron-attracting substance and at least one type of a precursor may be used in combination.

When the electron-attracting substance or the precursor thereof is also included, the content thereof is normally 0.005 to 0.6 parts by mass, or preferably 0.01 to 0.4 parts by mass, in metal atom equivalent to the total amount of the titanium oxide particles and the tungsten oxide particles of 100 parts by mass. When the content of the electron-attracting substance or the precursor thereof is smaller than 0.005 parts by mass, there is a possibility that sufficient enhancing effect of hydrophilicity enhancing activity by the electron-attracting substance cannot be obtained. On the other hand, when the content of the electron-attracting substance or the precursor thereof is larger than 0.6 parts by mass, there is a possibility that the hydrophilicity enhancing behavior actually lowers.

The hydrophilizing agent of the present invention may include at least one type of addition agents within a range not losing the effect of the present invention.

An example of the addition agent is one to be added in order to enhance the hydrophilicity. Specifically, an example of such an addition agent for the purpose of hydrophilicity enhancing effect is: a silicon compound such as amorphous silica, silica sol, water glass or organopolysiloxane; an aluminum compound such as amorphous alumina, alumina sol or aluminum hydroxide; aluminosilicate such as zeolite or kaolinite; an alkali earth metal oxide or an alkali earth metal hydroxide such as magnesium oxide, calcium oxide, strontium oxide, barium oxide, magnesium hydroxide, calcium hydroxide, strontium hydroxide or barium hydroxide; molecular sieve; activated carbon; a condensation polymer of an organic polysiloxane compound; a fluorine series polymer; a silicon series polymer; acrylic resin; polyester resin; melamine resin; urethane resin; alkyd resin; or the like.

Furthermore, binder or the like for holding the titanium oxide particles and the tungsten oxide particles more solidly on the surface of a substrate may be used as the addition agent for forming a coating film on the surface of a substrate using the hydrophilizing agent of the present invention (see, for example, Japanese Patent Application Laid-Open No. H8-67835, Japanese Patent Application Laid-Open No. H9-25437, Japanese Patent Application Laid-Open No. H10-183061, Japanese Patent Application Laid-Open No. H10-183062, Japanese Patent Application Laid-Open No. H10-168349, Japanese Patent Application Laid-Open No. H10-225658, Japanese Patent Application Laid-Open No. H11-1620, Japanese Patent Application Laid-Open No. H11-1661, Japanese Patent Application Laid-Open No. 2004-059686, Japanese Patent Application Laid-Open No. 2004-107381, Japanese Patent Application Laid-Open No. 2004-256590, Japanese Patent Application Laid-Open No. 2004-359902, Japanese Patent Application Laid-Open No. 2005-113028, Japanese Patent Application Laid-Open No. 2005-230661, Japanese Patent Application Laid-Open No. 2007-161824 or the like.)

The hydrogen ion concentration of the hydrophilizing agent of the present invention is normally pH 2.0 to pH 7.0, or preferably pH 3.0 to pH 6.0. The acidity becomes too strong and handing difficulty is increased when the hydrogen ion concentration is lower than pH 2.0 while the tungsten oxide particles may possibly dissolve when the hydrogen ion concentration is higher than pH 7.0. The hydrogen ion concentration of the hydrophilizing agent can be controlled normally by adding acid. An example of the acid to be used for controlling the hydrogen ion concentration is nitric acid, hydrochloric acid, sulfuric acid, formic acid, acetic acid, oxalic acid or the like.

### (Method of Producing A Hydrophilizing Agent)

A method of producing a hydrophilizing agent of the present invention is a method comprising: a process of dispersing titanium oxide particles in dispersion medium containing phosphoric acid (salt) dissolved; and a process of mixing the obtained titanium oxide particle dispersion with the tungsten oxide particles. By dispersing the titanium oxide particles in the dispersion medium, in which the phosphoric acid (salt) has been dissolved, before mixing the titanium oxide particles with the tungsten oxide particles as described above, the phosphoric acid (salt) is adsorbed on the surface of the titanium oxide particles. Since the titanium oxide particles in such a state tend not to agglomerate with the tungsten oxide particles, agglomeration of particles is suppressed in the hydrophilizing agent obtained by the producing method of the present invention.

For dispersing the titanium oxide particles in the dispersion medium containing the phosphoric acid (salt) dissolved, so as to obtain titanium oxide particle dispersion, it is preferable to mix the dispersion medium with the titanium oxide particles and then further carry out dispersing treatment. For example, a heretofore known method such as a method using a medium stirring disperser can be employed for the dispersing treatment. For preparing dispersion medium containing phosphoric acid (salt), in which the titanium oxide particles are to be dispersed, the content of phosphoric acid (salt) in the hydrophilizing agent obtained finally is set to fall within a range described above in the section of (Hydrophilizing Agent).

It is preferable to disperse the tungsten oxide particles in the dispersion medium so as to obtain tungsten oxide particle dispersion and then mix the tungsten oxide particle dispersion with the titanium oxide particle dispersion, though the tungsten oxide particles may be mixed directly with the titanium oxide particle dispersion. For dispersing the tungsten oxide particles in the dispersion medium, it is preferable to mix the tungsten oxide particles with the dispersion medium and then further carry out the dispersing treatment. For example, a heretofore known method such as a method using a medium stirring disperser can be employed for the dispersing treatment.

When the titanium oxide particle dispersion and the tungsten oxide particle dispersion are mixed, it is to be noted that the types of the dispersion media to be used for the dispersions may be the same type or different types, as long as dispersion medium after the mixing treatment becomes the dispersion medium described above in the section of (Hydrophilizing Agent). Moreover, the usage of dispersion media in the dispersions are also not especially limited as long as the content of dispersion medium in the hydrophilizing agent obtained finally falls within the range described above in the section of (Hydrophilizing Agent).

For mixing the titanium oxide particle dispersion with the tungsten oxide particles, the usage thereof is set in such a manner that the ratio of the titanium oxide particles to the tungsten oxide particles falls within the range described above in the section of (Hydrophilizing Agent).

The method of producing a hydrophilizing agent of the present invention preferably includes a process of adding an electron-attracting substance or a precursor thereof. Here, the electron-attracting substance or the precursor thereof may be added in the titanium oxide particle dispersion, added in the tungsten oxide particle dispersion or added in dispersion, which is obtained after mixing the titanium oxide particle dispersion with the tungsten oxide particle dispersion or with the tungsten oxide particles, though it is preferable to add the electron-attracting substance or the precursor thereof in the tungsten oxide particle dispersion from the aspect of obtainment of high hydrophilicity enhancing behavior.

When an electron-attracting substance or a precursor thereof is to be added, it is to be noted that the loading thereof is set in such a manner that the content of the electron-attracting substance or the precursor thereof in the hydrophilizing agent obtained finally falls within the range described above in the section of (Hydrophilizing Agent).

When a precursor of an electron-attracting substance is added, it is preferable to carry out light irradiation after adding treatment. Light to be used for irradiation is not especially limited and may be visible light or ultraviolet light. By carrying out light irradiation, the precursor is reduced by electrons generated by light excitation, becomes an electron-attracting substance and is supported on the surface of the titanium oxide particles and the surface of the tungsten oxide particles. It is to be noted that the precursor is transformed into an electron-attracting substance at the time of light irradiation when a hydrophilic film formed by the obtained hydrophilizing agent is irradiated with light even if light irradiation is not carried out when the precursor is added, and therefore sufficiently high hydrophilicity can be expected.

The light irradiation may be carried out at any stage after adding the precursor, though it is preferable to carry out the light irradiation before mixing the titanium oxide particle dispersion with the tungsten oxide particles.

Moreover, when a precursor of an electron-attracting substance is added, methanol, ethanol, oxalic acid or the like may be added in a suitable manner within a range not losing the effect of the present invention before light irradiation, in order to obtain the electron-attracting substance more effectively.

It is to be noted that addition agents described above in the section of (Hydrophilizing Agent) may be added in the method of producing a hydrophilizing agent of the present invention. In such a case, the addition agents may be added at any stage, though it is preferable to add the addition agents after mixing the titanium oxide particle dispersion with the tungsten oxide particle dispersion or with the tungsten oxide particles, for example.

### (Hydrophilic Product)

A hydrophilic product of the present invention comprises a hydrophilic film, which has been formed using a hydrophilizing agent of the present invention, provided on the surface. Here, the hydrophilic film is composed of titanium oxide particles and tungsten oxide particles in the hydrophilizing agent. When the hydrophilizing agent of the present invention includes an electron-attracting substance or a precursor thereof, the electron-attracting substance or the precursor thereof is supported on the surface of the titanium oxide particles and the surface of the tungsten oxide particles. It is to be noted that the supported precursor transits to an electron-attracting substance by, for example, light irradiation or the like.

The hydrophilic film can be formed by a heretofore known film deposition method such as a method of coating the surface of a substrate with the hydrophilizing agent of the present invention and then volatilizing dispersion medium, for example. The film thickness of the hydrophilic film is not especially limited and can be set in a suitable manner, normally in the range of several hundreds nm to several mm depending on the use application thereof or the like. The hydrophilic film may be formed at any part of the inner surface or the outer surface of the substrate, though it is preferable to form the hydrophilic film at a face to be irradiated with light (visible light), for example. It is to be noted that the material of the substrate is not especially limited as long as the hydrophilic film to be formed can be held with a workable intensity, and an article made of any material such as plastics, metal, ceramics, wood, concrete or paper, for example, may be employed as the object.

A specific example of the hydrophilic product of the present invention is: building material such as ceiling material, tile, glass, wallpaper, wall material or flooring; automobile interior material (an automobile instrument panel, an automobile seat or automobile ceiling material); textile products such as clothing or curtain; or the like.

The hydrophilic film, which has been formed using the hydrophilizing agent of the present invention, shows high hydrophilicity even in a dark place (under a light-blocked condition), and shows higher hydrophilicity when irradiated with light such as ultraviolet light or visible light. Accordingly, the hydrophilic product of the present invention displays sufficient hydrophilicity not only in an outdoor environment but also in an indoor environment, in which the article is sometimes under a light-blocked condition or, even when irradiated with light, receives light only from a visible light source such as a fluorescent lamp or a sodium lamp. Consequently, when ceiling material, tile, glass or the like of a hospital, for example, is coated with the hydrophilizing agent of the present invention and dried, favorable hydrophilicity is always expressed with or without indoor illumination and therefore it becomes possible not only to express an antifogging function but also to wipe the dirt easily and further to prevent electrification.

### [Examples]

The following description will explain the present invention in detail using examples, though the present invention is not limited to the examples.

It is to be noted that the respective physical properties of examples and comparative examples were measured by the following methods.

### <Crystal Form>

An X-ray diffraction spectrum was measured using an X-ray diffraction apparatus ("RINT2000/PC" made by Rigaku Corporation) so as to decide the crystal form from the spectrum.

### <BET Specific Surface Area>

The BET specific surface area was measured by a nitrogen adsorption method using a specific surface area measuring instrument ("Monosobe" made by Yuasa Ionics Co., Ltd.).

### <Mean Dispersed Particle Diameter>

Particle size distribution was measured using a submicron particle size distribution measuring instrument ("N4Plus" made by Coulter Corporation) and a monodispersive mode analysis was made automatically by software included attached to the instrument so as to obtain a mean dispersed particle diameter (nm) as a result.

### (Production Example 1- Preparation of Titanium Oxide Particle Dispersion)

Ammonium dihydrogen phosphate (Wako Special Grade Chemicals) of 20.7 g was dissolved in water of 5.39 kg, and solid matter of metatitanic acid obtained by heating hydrolysis of titanyl sulfate (solid content concentration as TiO₂ was 46.2 % by mass) of 1.49 kg was mixed with the obtained aqueous solution of ammonium dihydrogen phosphate. Here, the amount of the ammonium dihydrogen phosphate was 0.02 mol to metatitanic acid of 1 mol. Dispersing treatment was carried out for the obtained mixture under the following conditions using a medium stirring disperser ("Ultra Apex Mill UAM-1" made by Kotobuki Industries Co., Ltd.) so as to obtain titanium oxide particle dispersion.

Disperse Medium: beads made of zirconia of 1.85 kg having a diameter of 0.05 mm
Stirring Speed: circumferential speed of 8.1 m/sec
Flow Velocity: 0.25 L/min
Processing Temperature: 20 °C
Total Processing Time: approximately 76 minutes

The mean dispersed particle diameter of the titanium oxide particles in the obtained titanium oxide particle dispersion was 96 nm and pH of the dispersion was 8.2. Moreover, when a part of the dispersion was dried in a vacuum so as to obtain solid content, the BET specific surface area of the obtained solid content was 330 m²/g. When mixture before the dispersing treatment was also dried in a vacuum by the same method so as to obtain solid content and X-ray diffraction spectra of the solid content of the mixture before the dispersing treatment and of the solid content of the dispersion after the dispersing treatment were respectively measured and compared with each other, it is to be noted that both of the solid contents had a crystal form of Anatase and no change caused by the dispersing treatment was found in the crystal form. When the obtained dispersion was stored for 12 hours at 20 °C, no solid-liquid separation was found during storage.

### (Production Example 2 - Preparation of Tungsten Oxide Particle Dispersion)

Particulate tungsten oxide powder (made by Nippon Inorganic Colour & Chemical Co., Ltd.) of 1 kg was added to ion-exchanged water of 4 kg and mixed so as to obtain mixture. Dispersing treatment was carried out for the mixture under the following conditions using a medium stirring disperser ("Ultra Apex Mill UAM-1" made by Kotobuki Industries Co., Ltd.) so as to obtain tungsten oxide particle dispersion.

Disperse Medium: beads made of zirconia of 1.85 kg having a diameter of 0.05 mm
Stirring Speed: circumferential speed of 12.6 m/sec
Flow Velocity: 0.25 L/min
Processing Temperature: 20 °C
Total Processing Time: approximately 50 minutes

The mean dispersed particle diameter of the tungsten oxide particles in the obtained tungsten oxide particle dispersion was 118 nm. Moreover, when a part of the dispersion was dried in a vacuum so as to obtain solid content, the BET specific surface area of the obtained solid content was 40 m²/g. When mixture before the dispersing treatment was also dried in a vacuum by the same method so as to obtain solid content and X-ray diffraction spectra of the solid content of the mixture before the dispersing treatment and of the solid content of the dispersion after the dispersing treatment were respectively measured and compared with each other, it is to be noted that both of the solid contents had a crystal form of WO₃ and no change caused by the dispersing treatment was found in the crystal form. When the obtained dispersion was stored for 3 hours at 20 °C, no solid-liquid separation was found during storage.

### (Example 1)

An aqueous solution of hexachloroplatinic acid (H₂PtCl₆) was added to the tungsten oxide particle dispersion obtained in Production Example 2 in such a manner that hexachloroplatinic acid becomes 0.12 parts by mass in platinum atom equivalent to the usage of tungsten oxide particles of 100 parts by mass, so as to obtain tungsten oxide particle dispersion containing hexachloroplatinic acid. Solid content (amount of tungsten oxide particles) included in the dispersion of 100 parts by mass was 10.1 parts by mass (solid content concentration was 10.1 % by mass).

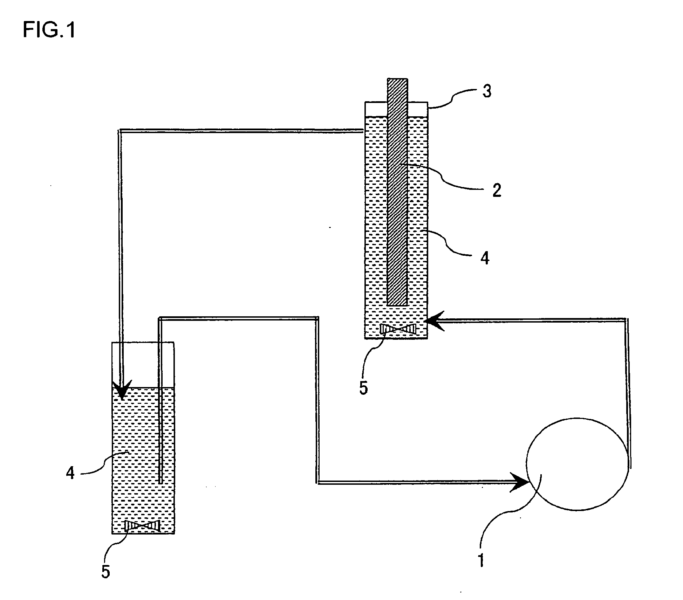

Next, a light irradiator, which is designed to flow liquid 4 from the lower part to the upper part of a glass tube (having an inner diameter of 37 mm and a height of 360 mm) 3 having an double-tube germicidal lamp ("GLD15MQ" made by Sankyo Denki Co., Ltd.) 2 provided therein using a roller tube pump 1 as illustrated in FIG. 1 was used to flow the tungsten oxide particle dispersion containing hexachloroplatinic acid of 500 g in the device at a speed of 1 L/min so as to carry out light irradiation (ultraviolet light irradiation) for 20 minutes. Next, methanol was added to the tungsten oxide particle dispersion containing hexachloroplatinic acid, which was subjected to light irradiation, in such a manner that the concentration of methanol becomes 1 % by mass of the same light irradiator at a speed of 1 L/min so as to further carry out light irradiation for 20 minutes, and tungsten oxide particle dispersion containing platinum was obtained. The solid content (amount of tungsten oxide particles) included in the dispersion of 100 parts by mass was 10.0 parts by mass (solid content concentration was 10.0 % by mass).

Next, the tungsten oxide particle dispersion containing platinum was mixed with the titanium oxide particle dispersion obtained in Production Example 1 in such a manner that the ratio of the titanium oxide particles to the tungsten oxide particles becomes 1:1 (mass ratio), and a hydrophilizing agent of the present invention was obtained. In the hydrophilizing agent of the present invention, the content of platinum in platinum atom equivalent was 0.06 parts by mass to the total usage of the titanium oxide particles and the tungsten oxide particles of 100 parts by mass. The solid content (total amount of titanium oxide particles and tungsten oxide particles) included in the hydrophilizing agent of 100 parts by mass was 5 parts by mass (solid content concentration was 5 % by mass) and pH was 4.2.

When the obtained hydrophilizing agent was stored for 12 hours at 20 °C, no solid-liquid separation was found during storage.

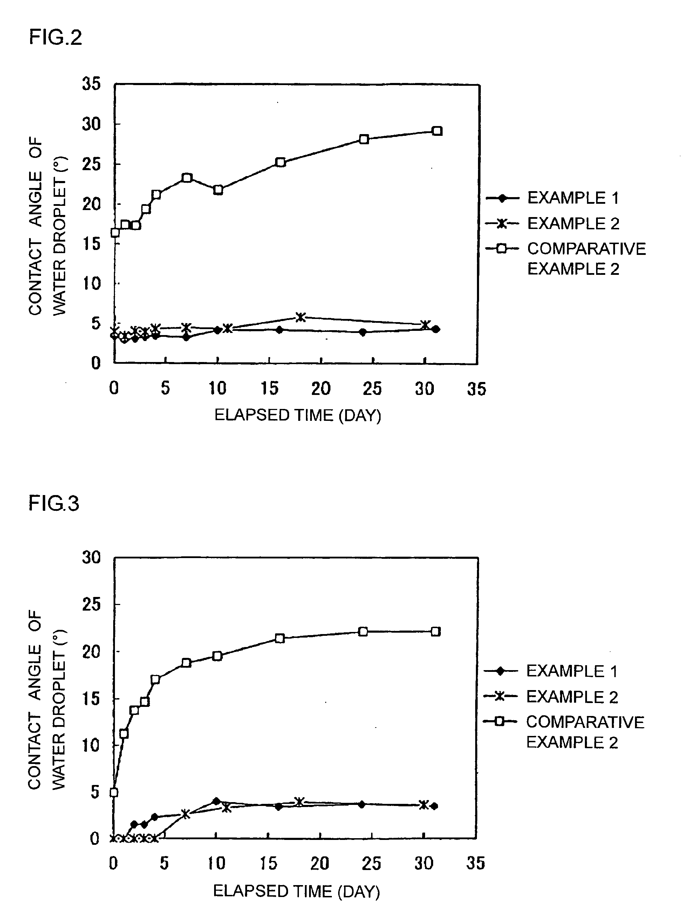

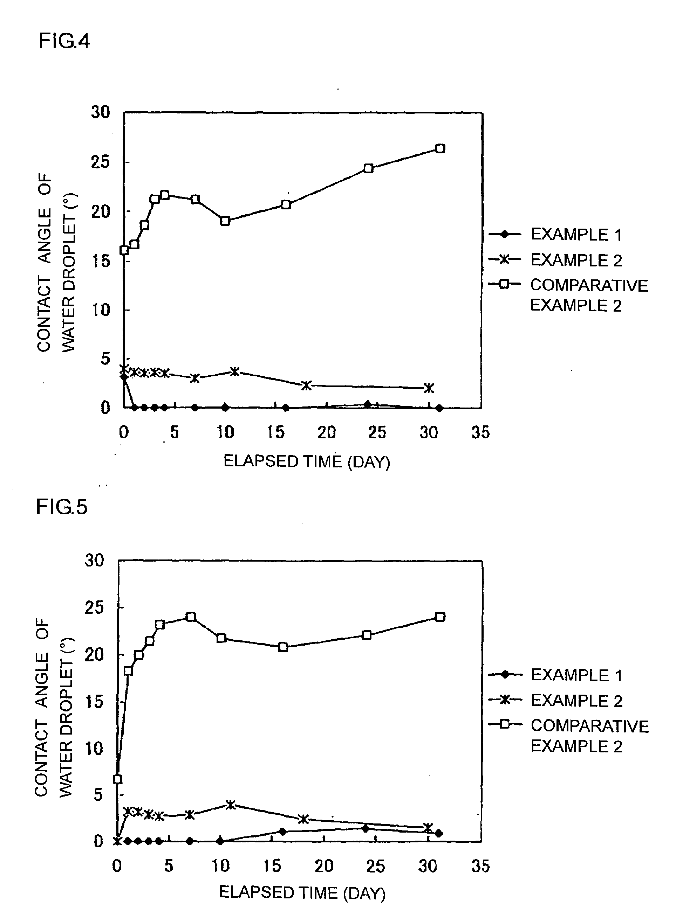

A specimen having a coating film formed using the obtained hydrophilizing agent was prepared by the following method and time-dependent change of the hydrophilicity under the following Conditions (1) to (4) was evaluated by measuring a contact angle of a water droplet. The measurement results are shown as graphs wherein elapsed time is plotted on the abscissa axis and the contact angle of a water droplet is plotted on the ordinate axis. The result obtained from Condition (1) is shown in FIG. 2, the result obtained from Condition (2) is shown in FIG. 3, the result obtained from Condition (3) is shown in FIG. 4 and the result obtained from Condition (4) is shown in FIG. 5.

It is to be noted that measurement of a contact angle of a water droplet was made using a contact angle measuring instrument ("CA-A type" made by Kyowa Interface Science Co., Ltd.) 5 seconds after installing a water droplet (approximately 0.4 µL) on a coating film of a specimen in all cases.

### <Preparation of Specimen (Formation of Coating Film)

A glass plate having a length of 80 mm, a width of 80 mm and a thickness of 3 mm was coated with the obtained hydrophilizing agent, rotated by a spin coater ("1H-D3" made by Mikasa Co., Ltd.) for 5 seconds at 300 rpm and then for 30 seconds at 500 rpm so as to remove excess of dispersion and then dried for 60 minutes at 110 °C so as to prepare a specimen. The obtained specimen was stored under a light-blocked condition for 5 days in the atmosphere at room temperature and then used in the respective tests.

### <Hydrophilicity Evaluation Test Condition (1)>

The contact angle of a water droplet on a specimen was measured and then the specimen was stored under a light-blocked condition in the atmosphere at room temperature while the contact angle of a water droplet was measured at predetermined time intervals.

### <Hydrophilicity Evaluation Test Condition (2)>

First, a coating film of a specimen was irradiated with ultraviolet light for 2 days in the atmosphere at room temperature using a commercially available black light as a light source. Here, the ultraviolet light intensity in the vicinity of the coating film was approximately 1 mW/cm² (measured by an ultraviolet meter "UVR-2" made by Topcon Corporation attached with a light receiving section "UD-36" made by Topcon Corporation).

Next, the contact angle of a water droplet on a specimen after ultraviolet light irradiation was measured and then the specimen was stored under a light-blocked condition in the atmosphere at room temperature while the contact angle of a water droplet was measured at predetermined time intervals.

### <Hydrophilicity Evaluation Test Condition (3)>

The contact angle of a water droplet on a specimen was measured and then the specimen was stored under visible light irradiation in the atmosphere at room temperature while the contact angle of a water droplet was measured at predetermined time intervals.

It is to be noted that irradiation of visible light during storage was carried out using a commercially available white fluorescent lamp as a light source in such a manner that a coating film of a specimen is irradiated with visible light included in the fluorescent lamp through an acrylic resin plate ("N169" made by Nitto Jushi Kogyo Co., Ltd.). Here, the illuminance in the vicinity of the coating film was 1000 lux (measured by an illuminance meter "T-10" made by Minolta Co., Ltd.).

### <Hydrophilicity Evaluation Test Condition (4)>

First, a coating film of a specimen was irradiated with ultraviolet light for 2 days in the atmosphere at room temperature using a commercially available black light as a light source. Here, the ultraviolet light intensity in the vicinity of the coating film was approximately 1 mW/cm² (measured by an ultraviolet meter "UVR-2" made by Topcon Corporation attached with a light receiving section "UD-36" made by Topcon Corporation).

Next, the contact angle of a water droplet on a specimen after ultraviolet light irradiation was measured and then the specimen was stored under visible light irradiation in the atmosphere at room temperature while the contact angle of a water droplet was measured at predetermined time intervals.

It is to be noted that irradiation of visible light during storage was carried out using a commercially available white fluorescent lamp as a light source in such a manner that a coating film of a specimen is irradiated with visible light included in the fluorescent lamp through an acrylic resin plate ("N169" made by Nitto Jushi Kogyo Co., Ltd.). Here, the illuminance in the vicinity of the coating film was 1000 lux (measured by an illuminance meter "T-10" made by Minolta Co., Ltd.).

It is understood from FIGS. 2 and 3 that a coating film formed of the hydrophilizing agent of Example 1 shows high hydrophilicity even under a light-blocked condition and, moreover, can maintain the hydrophilicity over a long time. Moreover, it is understood from FIGS. 4 and 5 that a coating film formed of the hydrophilizing agent of Example 1 shows higher hydrophilicity when irradiated with visible light in the fluorescent lamp.

### (Example 2)

The titanium oxide particle dispersion obtained in Production Example 1 was mixed with the tungsten oxide particle dispersion obtained in Production Example 2 in such a manner that the ratio of the titanium oxide particles to the tungsten oxide particles becomes 1:1 (mass ratio), and a hydrophilizing agent of the present invention was obtained. The solid content (total amount of titanium oxide particles and tungsten oxide particles) included in the hydrophilizing agent of 100 parts by mass was 5 parts by mass (solid content concentration was 5 % by mass) and pH was 4.4.

When the obtained hydrophilizing agent was stored for 12 hours at 20 °C, no solid-liquid separation was found during storage.

A specimen having a coating film formed using the hydrophilizing agent was prepared by the same method as that of Example 1 and time-dependent change of the hydrophilicity under Conditions (1) to (4) was evaluated by the same method as that of Example 1. The result obtained from Condition (1) is shown in FIG. 2, the result obtained from Condition (2) is shown in FIG. 3, the result obtained from Condition (3) is shown in FIG. 4 and the result obtained from Condition (4) is shown in FIG. 5.

It is understood from FIGS. 2 and 3 that a coating film formed of the hydrophilizing agent of Example 2 shows high hydrophilicity even under a light-blocked condition and, moreover, can maintain the hydrophilicity over a long time. Moreover, it is understood from FIGS. 4 and 5 that a coating film formed of the hydrophilizing agent of Example 2 shows higher hydrophilicity when irradiated with visible light in the fluorescent lamp.

### (Comparative Example 1)

A hydrophilizing agent for comparison including no phosphoric acid (salt) was obtained by carrying out the same operation as that of Example 1 except that commercially available titanium oxide particle dispersion ("STS-01" made by Ishihara Industry Co., Ltd., containing nitric acid and having a mean dispersed particle diameter of 50 nm) was used instead of the titanium oxide particle dispersion obtained in Production Example 1. The solid content (total amount of titanium oxide particles and tungsten oxide particles) included in the hydrophilizing agent of 100 parts by mass was 5 parts by mass (solid content concentration was 5 % by mass) and pH was 1.9.

When the obtained hydrophilizing agent was stored for 3 hours at 20 °C, agglomeration of particles is generated during storage and solid-liquid separation occurred. Accordingly, it was impossible to form the same coating film as that of Example 1 using the hydrophilizing agent.

### (Comparative Example 2)

Commercially available titanium oxide particle dispersion ("STS-01" made by Ishihara Industry Co., Ltd., containing nitric acid and having a mean dispersed particle diameter of 50 nm) was used singly as a hydrophilizing agent for comparison. A specimen having a coating film formed using the hydrophilizing agent was prepared by the same method as that of Example 1 and time-dependent change of the hydrophilicity under Conditions (1) to (4) was evaluated by the same method as that of Example 1. The result obtained from Condition (1) is shown in FIG. 2, the result obtained from Condition (2) is shown in FIG. 3, the result obtained from Condition (3) is shown in FIG. 4 and the result obtained from Condition (4) is shown in FIG. 5.

It is understood from FIGS. 2 to 5 that a coating film formed of the hydrophilizing agent of Comparative Example 2 has poor hydrophilicity in comparison with a coating film formed of the hydrophilizing agent of Examples 1 and 2 both under a light-blocked condition and under visible light irradiation and, moreover, the difference in the hydrophilicity between the examples and the comparative examples tends to increase with time.

### (Reference Example 1)

When ceiling material was coated with the hydrophilizing agent obtained in Example 1 and then dried so as to volatilize dispersion medium, the hydrophilicity of the surface of the ceiling material was enhanced by light irradiation with indoor illumination and therefore it became possible to wipe the dirt easily and further to prevent electrification.

### (Reference Example 2)

When tile was coated with the hydrophilizing agent obtained in Example 1 and then dried so as to volatilize dispersion medium, the hydrophilicity of the surface of the tile was enhanced by light irradiation with indoor illumination and therefore it became possible to wipe the dirt easily and further to prevent electrification.

### (Reference Example 3)

When glass was coated with the hydrophilizing agent obtained in Example 1 and then dried so as to volatilize dispersion medium, the hydrophilicity of the surface of the glass was enhanced by light irradiation with indoor illumination and therefore it became possible not only to express an antifogging function but also to wipe the dirt easily and further to prevent electrification.

### (Reference Example 4)

When wall material was coated with the hydrophilizing agent obtained in Example 1 and then dried so as to volatilize dispersion medium, the hydrophilicity of the surface of the wall material was enhanced by light irradiation with indoor illumination and therefore it became possible to wipe the dirt easily and further to prevent electrification.

### (Reference Example 5)

When wallpaper was coated with the hydrophilizing agent obtained in Example 1 and then dried so as to volatilize dispersion medium, the hydrophilicity of the surface of the wallpaper was enhanced by light irradiation with indoor illumination and therefore it became possible to wipe the dirt easily and further to prevent electrification.

### (Reference Example 6)

When flooring was coated with the hydrophilizing agent obtained in Example 1 and then dried so as to volatilize dispersion medium, the hydrophilicity of the surface of the flooring was enhanced by light irradiation with indoor illumination and therefore it became possible to wipe the dirt easily and further to prevent electrification.

### (Reference Example 7)

When the surface of automobile interior material such as an automobile instrument panel, an automobile seat or automobile wall material was coated with the hydrophilizing agent obtained in Example 1 and then dried so as to volatilize dispersion medium, the hydrophilicity of the surface of the automobile interior material was enhanced by light irradiation with interior illumination and therefore it became possible to wipe the dirt easily and further to prevent electrification.

## Claims

1. A hydrophilizing agent comprising:
particles of titanium oxide;
particles of tungsten oxide;
phosphoric acid or a phosphoric acid salt; and
a dispersion medium,
wherein the molar ratio of the phosphoric acid or the phosphoric acid salt to the titanium oxide is from 0.0001:1 1 to 0.2:1.

2. The hydrophilizing agent according to claim 1, further comprising an electron-attracting substance or a precursor thereof.

3. The hydrophilizing agent according to claim 2, wherein the electron-attracting substance or the precursor thereof includes at least one metal selected from the group consisting of Cu, Pt, Au, Pd, Ag, Fe, Nb, Ru, Ir, Rh and Co.

4. A method of producing a hydrophilizing agent comprising:
a step of dispersing particles of titanium oxide in dispersion medium comprising dissolved phosphoric acid or a dissolved phosphoric acid salt; and
a step of mixing the obtained titanium oxide particle dispersion with particles of tungsten oxide.

5. The method of producing a hydrophilizing agent according to claim 4,
wherein the particles of tungsten oxide are dispersed in a dispersion medium to form a tungsten oxide particle dispersion before being mixed with the titanium oxide particle dispersion.

6. The method of producing a hydrophilizing agent according to claim 4 or 5, further comprising a step of adding an electron-attracting substance or a precursor thereof.

7. The method of producing a hydrophilizing agent according to claim 5, further comprising a step of adding an electron-attracting substance or a precursor thereof to the tungsten oxide particle dispersion.

8. The method of producing a hydrophilizing agent according to claim 6 or 7, which comprises adding a precursor of an electron-attracting substance followed by a step of carrying out light irradiation.

9. The method of producing a hydrophilizing agent according to claim 8,
wherein the light irradiation is carried out before mixing the titanium oxide particle dispersion with the particles of tungsten oxide.

10. A method of forming a hydrophilic film, comprising use of a hydrophilizing agent according to any one of claims 1 to 3 or obtainable by the method of any of claims 4 to 9.

11. A hydrophilic product comprising the hydrophilic film obtainable by the method of claim 10 as a surface thereof.
